# EUROPEAN PATENT SPECIFICATION

(11) **EP 3 416 005 B1**
(45) Date of publication and mention of the grant of the patent: **22.12.2021**
(21) Application number: 18176881.3
(22) Date of filing: 08.06.2018
(51) Int. Cl.: G05B 19/10, G06F 21/00

(54) **SAFETY CONTROLLER WITH CYBER-SECURE MAINTENANCE OVERRIDE**
SICHERHEITSSTEUERGERÄT MIT CYBER-SECURE-WARTUNGS-OVERRIDE
DISPOSITIF DE COMMANDE DE SÉCURITÉ À DÉRIVATION DE MAINTENANCE CYBER SÉCURISÉE

(30) Priority: 16.06.2017 US 201762520898 P; 05.06.2018 US 201816000229
(43) Date of publication of application: 19.12.2018
(73) Proprietor: Honeywell International Inc., Morris Plains, NJ 07950 (US)
(72) Inventor: WENSEN, Aad van, Morris Plains, NJ 07950 (US); BEERENS, Anton, Morris Plains, NJ 07950 (US)
(74) Representative: Houghton, Mark Phillip

(56) References cited:
- EP-A1- 3 144 759
- EP-A2- 1 517 203
- EP-A2- 2 343 712
- US-A1- 2016 330 228

## Description

### CROSS REFERENCE TO RELATED APPLICATIONS

Not applicable.

### FIELD

Disclosed embodiments relate to a safety controller for use in industrial control systems.

### BACKGROUND

An industrial facility, such as an industrial processing facility (or plant), to implement a fault-tolerant industrial process control system can include a safety instrumented system (SIS) for monitoring and overriding the process control provided by the process control system to maximize the likelihood of safe operation of the processing plant. A safety controller as known in the art of process control is a device or combination of devices connected to each another which receive process signals from sensors and uses these signals to produce output control signals using logic operations and, if needed, by further data processing steps. These output control signals are coupled to control actuators which carry out specific actions on the various processing equipment.

A distinguishing feature of a safety controller in contrast to a conventional process controller is that the safety controller always ensures that potentially dangerous apparatus are being controlled is in a safe state, which is implemented by running safety control programs. This safety requirement even applies when a malfunction occurs within the safety controller itself or in a device in the processing system (e.g., an Input/Output (IO) module, sensor or actuator, or processing equipment) which is connected to it. Safety controllers are therefore, subject to stringent requirements for their own fail safety, which results in considerable additional effort during their design development and manufacture. Generally, safety controllers require special licensing from responsible supervisory government authorities before they can be used, such as from professional societies dealing with work safety or from a technical supervisory association. The safety controller must also comply with specific safety standards depending on their geographic location, such as in Europe defined in the European Machine safety standard EN 954-1 which is used as an essential base for the risk analysis of safety-related components of industrial controls.

A typical safety controller of a SIS (e.g., such as implemented by a programmable logic controller (PLC)) runs stored safety control programs and provides at least a maintenance override mode using a force (FRC) enable position which allows entering a maintenance override mode. The safety controller is generally located in a control room of the plant, but can also be located in remote locations such as well heads or unmanned platforms. A key switch provides the FRC enable ON position and a FRC enable OFF position for enabling the maintenance override mode to be implemented.

From government safety regulations it is generally mandatory to remove all maintenance overrides with a single hardware switch action. It is believed that in all known cases for removing active maintenance overrides the same key-switch is returned by the user to the maintenance disabled state by moving from the FRC enable ON position to the FRC enable OFF position for the single key-switch arrangement, and from the FRC reset OFF position to the FRC reset ON position for the 2 key-switch arrangement.

**[0006.1]** EP3144759 discloses an information processing device includes a display configured to display a first graphical faceplate representing a state of a control target, an operation unit which is used for operating the first graphical faceplate, and a controller configured to switch the first graphical faceplate displayed by the display to a second graphical faceplate for operating the control target based on an operation performed by the operation unit.

### SUMMARY

This Summary briefly indicates the nature and substance of this Disclosure. It is submitted with the understanding that it will not be used to interpret or limit the scope or meaning of the claims. The present invention in its various aspects is as set out in the appended claims.

It is recognized herein as more and more customers for a system have maintenance overrides that are active for a relatively long duration, such as during a plant overhaul, as part of a stand-by strategy, or due to long spare part delivery times, while the key-switch of the controller is in the FRC enable ON position enabling the maintenance override mode, the controller is susceptible to cyber-security risks. This cyber-security susceptibility is because while in the maintenance override mode all override enabled points in the plant including input/output devices (IOs), field devices and processing equipment are exposed to all attackers that have a forcing-capable communication path to the SIS, including the digital and analog outputs of IO devices that drive safety critical actuators coupled to processing equipment during such maintenance overrides. These cyber-security risks can comprise direct-access attacks (such as driving an input or output to an unsafe value) or tampering (changing parameters, such as the temperature of a burner).

Disclosed embodiments include controllers that comprise two FRC key-switches including a FRC enable key-switch with a FRC enable On position for entering the maintenance override mode, and a dedicated FRC reset key-switch that has a reset position for clearing (resetting) the 'active' maintenance overrides entered while in the maintenance override mode (while the FRC enable is On). In this disclosed arrangement, the FRC enable key-switch can be returned by a user to the FRC enable off (disabled) position which changes the safety controller state back to the run mode with no changes to the currently active maintenance override(s), yet new maintenance overrides cannot be added until the FRC enable key-switch is set to the maintenance override mode (where new maintenance overrides can be added) until the FRC enable is set to FRC enable ON again. This arrangement reduces the maintenance override mode time window (with FRC enable ON) to the time it takes to set a force (typically less than a minute) which reduces the cyber-attack time window from the time it take to complete the maintenance (typically weeks) to the time it takes to set the forces (typically minutes).

### BRIEF DESCRIPTION OF THE DRAWINGS

FIG. 1A is diagram depicting a control system were the safety controller has a disclosed multi-key switch including a dedicated maintenance override key-switch for the removal of active maintenance overrides, according to an example embodiment.
FIG. 1B is a block diagram representation of a disclosed safety controller.
FIG. 2 shows an example multi-key switch including a dedicated FRC reset key-switch for the removal of active maintenance overrides.
FIG. 3 is a flow chart that shows steps in a method of operating a safety controller with a multi-key switch including a dedicated FRC reset key-switch for the removal of active maintenance overrides.

### DETAILED DESCRIPTION

Disclosed embodiments are described with reference to the attached figures, wherein like reference numerals, are used throughout the figures to designate similar or equivalent elements. The figures are not drawn to scale and they are provided merely to illustrate aspects disclosed herein. Several disclosed aspects are described below with reference to example applications for illustration. It should be understood that numerous specific details, relationships, and methods are set forth to provide a full understanding of the embodiments disclosed herein.

One having ordinary skill in the relevant art, however, will readily recognize that the disclosed embodiments can be practiced without one or more of the specific details or with other methods. In other instances, well-known structures or operations are not shown in detail to avoid obscuring aspects disclosed herein. Disclosed embodiments are not limited by the illustrated ordering of acts or events, as some acts may occur in different orders and/or concurrently with other acts or events. Furthermore, not all illustrated acts or events are required to implement a methodology in accordance with this Disclosure.

Also, the terms "coupled to" or "couples with" (and the like) as used herein without further qualification are intended to describe either an indirect or direct electrical connection. Thus, if a first device "couples" to a second device, that connection can be through a direct electrical connection where there are only parasitics in the pathway, or through an indirect electrical connection via intervening items including other devices and connections. For indirect coupling, the intervening item generally does not modify the information of a signal but may adjust its current level, voltage level, and/or power level.

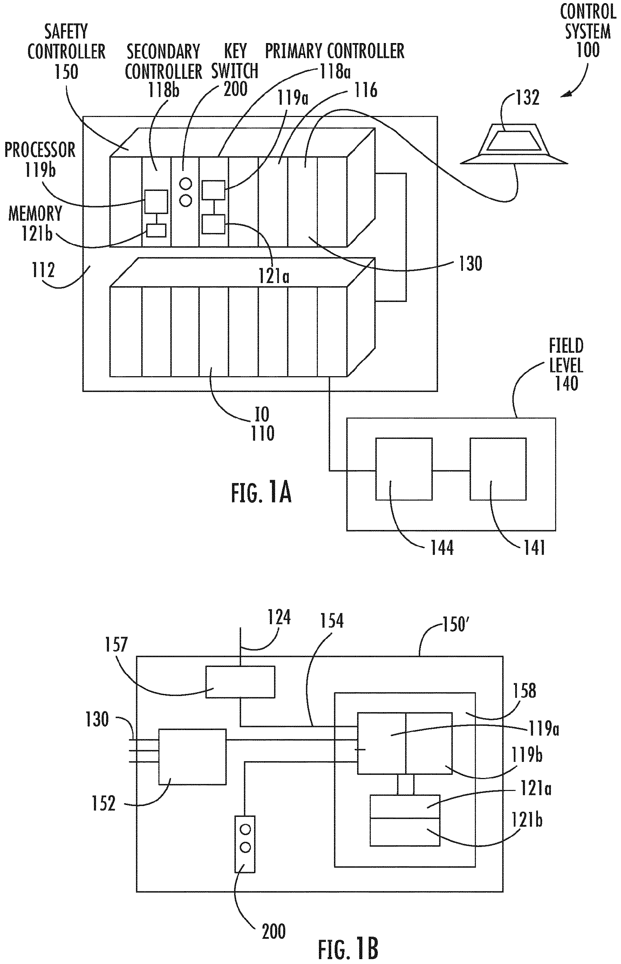

FIG. 1A is block diagram depiction of a control system 100 comprising a disclosed safety controller 150 for implementing a cyber-secure maintenance override. The safety controller 150 including a secondary processor 119b having associated secondary memory 121b and a parallel connected primary controller 118a including a processor 119a having an associated memory 121a are each coupled to IO modules 110 which couple to a field level 140 that includes sensors and actuators 144 associated with the processes run by the processing equipment 141. The process may include standard processes, such as those of controlling factory equipment, and safety processes related to a safety applications. The safety controller 150 allows execution of both safety control when the secondary processor 119b is active and standard control programs when the primary controller 118a is active.

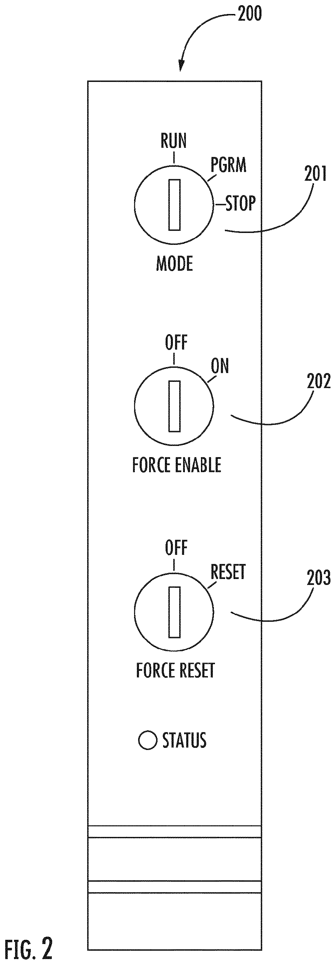

The safety controller 150 includes a housing 112. The safety controller 150 includes a disclosed multi-key switch 200 (see the multi-key switch 200 shown in FIG. 2 described below) that has a dedicated FRC reset key-switch 203 for the removal of active maintenance overrides. The multi-key switch 200 comprises a hardware switch which is generally needed to meet government safety regulations. As known in the art of switches, hardware switches use an underlying switch chip or driver to handle all of the switching directly, while in contrast software switches do this in software or at the firmware level.

The processors 119a and 119b can comprise a digital signal processor (DSP), a microcontroller, an application specific integrated circuit (ASIC), a general processor, or any other combination of one or more integrated processing devices. The safety controller 150 also is shown including a serial communication port 130 (such as an RS-232 port) that allows it to communicate directly with a programming terminal 132 shown by example in FIG. 1A as being a portable computer. A power supply 116 is also shown for the safety controller 150.

FIG. 1B is a block diagram representation of a disclosed safety controller shown as 150'. The safety controller 150' is shown including an interface circuit 157 communicating via a connector 124 (generally to a backplane, not shown) and an interface circuit 152 communicating with a port 130, both connected by an internal bus 154 to a processing block 158 including a processor 119a and a memory 119b and memories 121a and 121b. Interface circuit 152 may be used to receive programming information from the programming terminal 132 shown in FIG. 1A. The internal bus 154 also connects to the multi-key switch 200 so that the multi-key switch 200 (as well as each of the interface circuits 157 or 152) may be monitored by the processors 119a, 119b. The processors 119a, 119b can communicate directly with their memory 121a, 121b using a memory bus separate from the internal bus 154. The memories 121a, 121b can comprises a writable non-volatile memory, or be a combination of writable volatile and non-volatile memory.

FIG. 2 shows an example multi-key switch 200 including a dedicated FRC key-switch 203 specifically for the removal of maintenance overrides. FRC reset key-switch 203 has an OFF and a reset position. There is a second FRC key-switch shown as a FRC enable key-switch 202 that has an OF position and an ON position. There is another key-switch shown as a mode switch 201 having a run, PGM and a stop position. When the mode switch 201 is in the run position the safety controller is configured to be in a run mode which overrides the primary controller to implement the secondary controller only in a case of a detected fault in the controlled process or a detected fault in the primary process controller.

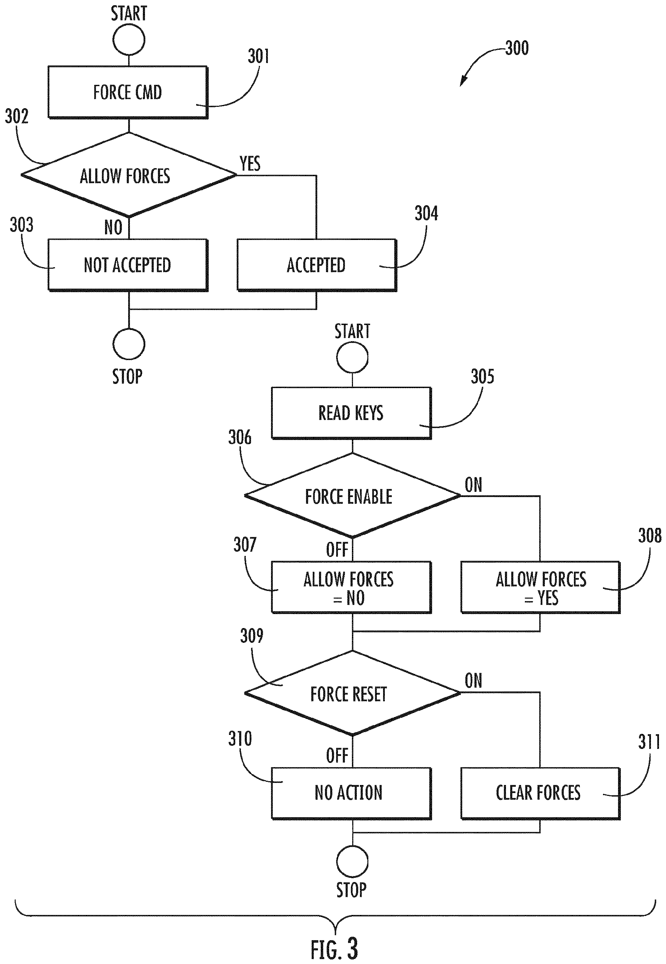

FIG. 3 is a flow chart that shows steps in an example method 300 of process control in a fault-tolerant control system including operating a safety controller with a cyber-secure maintenance override using a disclosed multi-key switch 200 that includes a dedicated FRC reset switch 203 for the removal of active maintenance overrides. Step 301 comprises attempting to enter at least one FRC command (FRC CMD) to a safety controller. Step 302 checks whether the FRC enable key-switch 202 is set to the FRC enable ON position. If the FRC enable is ON, the user's FRC CMD is accepted (entered) in step 304, otherwise the FRC CMD is not accepted (not entered) shown as step 303. Multiple FRC CMDs serving different input and outputs can be accepted and active at a given time. An example of a FRC command is 'switch output channel 45 to ON'.

Provided the FRC command was accepted in step 304, step 305 is reached which comprises reading the FRC reset key-switch 203 position and FRC enable key-switch 202 position. Step 306 checks whether the FRC enable key-switch 202 read in step 305 is in the ON position. If the FRC enable key-switch 202 is ON, the FRC CMD accepted in step 304 is accepted in step 308 thus becoming an active FRC CMD, otherwise the FRC CMD accepted in step 304 is not accepted in step 307 so that no action is taken in step 307. Step 309 comprises checking the FRC reset key-switch 203 position. If the FRC reset key-switch 203 is ON (from the read in step 305), then the active FRC CMD entered in step 308 is cleared in step 311, otherwise if the FRC reset key-switch 203 is OFF, then no FRC CMD resetting/clearing action is taken and the current FRC CMD is continued.

During a maintenance period multiple FRC CMD for different inputs and outputs are entered and those forces must remain active until maintenance is completed. Without this Disclosure the FRC enable key-switch in step 306 must be kept in the enable position while maintenance is ongoing. This means without this Disclosure a cyber-attack has a FRC CMD attack window open with the duration of the maintenance period. During this attack window an attacker is enabled to enter unintentional FRC CMD. The Disclosure allows the FRC enable key-switch 202 to be returned to the OFF position immediately after accepting a FRC CMD only to be set to the ON position when a genuine FRC CMD is expected. The FRC reset key-switch 203 assures that all forces can be removed when needed.

While various disclosed embodiments have been described above, it should be understood that they have been presented by way of example only, and not as a limitation. Numerous changes to the disclosed embodiments can be made in accordance with the Disclosure herein without departing from the scope of this Disclosure. Thus, the breadth and scope of this Disclosure should not be limited by any of the above-described embodiments. Rather, the scope of this Disclosure should be defined in accordance with the following claims and their equivalents.

Although disclosed embodiments have been illustrated and described with respect to one or more implementations, equivalent alterations and modifications will occur to others skilled in the art upon the reading and understanding of this specification and the annexed drawings. While a particular feature may have been disclosed with respect to only one of several implementations, such a feature may be combined with one or more other features of the other implementations as may be desired and advantageous for any given or particular application.

## Claims

1. A safety controller (150) for a control system (100) configured to run a controlled process, the safety controller comprising:
an interface circuit (157), configured to couple to input/output (10) devices that are coupled to field devices (144) including sensors and actuators that are coupled to processing equipment (141) involved in said controlled process;
a primary controller (118a) including a processor (119a) having an associated memory (121a) and a parallel connected secondary controller including a secondary processor (119b) having an associated secondary memory (121b), each configured for implementing control loops that automatically take actions by sending control signals to said actuators;
a mode-switching multi-key switch (200) coupled to said processor (119a);
a bus (154) coupling said interface circuit (157) and said mode-switching multi-key switch (200) coupled to said processor, said multi-key switch comprising:
a force, FRC, enable key-switch (202) having a FRC enable On position, wherein said FRC enable On position is configured to allow said safety controller to enter a maintenance override mode to enable entry of maintenance overrides and the FRC enable key-switch having a FRC OFF position, wherein said FRC OFF position is configured to change a safety controller state back to a run mode, said FRC OFF position preventing changes to said maintenance override mode by prohibiting additional maintenance overrides until said FRC enable key-switch is set to said FRC On position again, and
a FRC reset key-switch (203) having a FRC reset position for removal of said maintenance overrides entered when in said maintenance override mode.

2. The safety controller of claim 1, wherein said multi-key switch further comprises a mode key-switch (201) having a run, program and a stop position, and wherein when in said run position said safety controller is configured to be in a run mode which overrides said primary controller to implement said secondary controller only in a case of a detected fault in said controlled process or a detected fault in said primary process controller.

3. The safety controller of claim 1, wherein said multi-key switch comprises a hardware switch.

4. The safety controller of claim 1, wherein said safety controller comprises a programmable logic controller, PLC.

5. The safety controller of claim 1, further comprising a serial communication port configured to enable direct communication with a programming terminal.

6. The safety controller of claim 1, wherein multiple FRC commands serving different input and outputs can be accepted and active at a given time.

7. A method of process control for a controlled process run by a fault-tolerant control system including field devices (144) including sensors and actuators that are coupled to processing equipment (141) involved in said controlled process, and a safety controller (150) comprising a primary controller (118a) including a processor (119a) having an associated memory (121a) and a parallel connected secondary controller (118b) including a secondary processor (119b) having an associated second memory (121b) both coupled to said processing equipment, said safety controller (150) implementing a cyber-secure maintenance override, said safety controller having a multi-key switch (200) including:
a force, FRC, (FRC) enable key-switch (202) having a FRC enable On position for entering a maintenance override mode to enable entry of maintenance overrides of said safety controller and on OFF position; and
a FRC reset key-switch (203) having a FRC reset position for removal of said maintenance overrides entered when in said maintenance override mode, the method comprising the steps of:
moving said FRC enable key-switch (202) to said FRC enable On position for allowing said safety controller to enter said maintenance override mode to enable enter of maintenance overrides, and
returning said FRC enable key-switch (202) to a FRC OFF position to change a safety controller state back to a run mode while preventing changes to said maintenance override mode by prohibiting additional maintenance overrides until said FRC enable key-switch is set to said FRC On position again.

8. The method of claim 7, wherein said multi-key switch further comprises a mode key-switch (201) having a run, program and a stop position, and wherein when in said run position said safety controller is configured to be in a run mode which overrides said primary controller to implement said secondary controller only in a case of a detected fault in said controlled process or a detected fault in said primary process controller.

9. The method of claim 7, wherein said multi-key switch comprises a hardware switch.

10. The method of claim 7, wherein said safety controller comprises at least one programmable logic controller, PLC.

11. The method of claim 7, wherein said safety controller further comprises a serial communication port configured to enable direct communication with a programming terminal, further comprising programming said safety controller using said programming terminal.

12. The method of claim 7, further comprising accepting and rendering active at a given time multiple FRC commands serving different input and outputs.

## Patentansprüche

1. Sicherheitssteuergerät (150) für ein Steuersystem (100), das dazu konfiguriert ist, einen gesteuerten Prozess auszuführen, wobei das Sicherheitssteuergerät umfasst:
eine Schnittstellenschaltung (157), die dazu konfiguriert ist, mit Eingabe-/Ausgabe-Geräten (E/A-Geräten) zu koppeln, die mit Feldgeräten (144) gekoppelt sind, die Sensoren und Aktoren beinhalten, die mit Verarbeitungsgeräten (141) gekoppelt sind, die am gesteuerten Prozess beteiligt sind;
ein Primärsteuergerät (118a), das einen Prozessor (119a) mit einem zugeordneten Speicher (121a) beinhaltet, und ein parallel geschaltetes Sekundärsteuergerät, das einen Sekundärprozessor (119b) beinhaltet, der mit einem Sekundärspeicher (121b) assoziiert ist, die jeweils zum Umsetzen von Steuerschleifen konfiguriert sind, die durch Senden von Steuersignalen an die Aktoren automatisch Aktionen ausführen;
einen Modusumschalt-Mehrtastenschalter (200), der mit dem Prozessor (119a) gekoppelt ist;
einen Bus (154), der die Schnittstellenschaltung (157) und den Modusumschalt-Mehrtastenschalter (200) koppelt, der mit dem Prozessor gekoppelt ist, wobei der Mehrtastenschalter umfasst:
einen Kraft-Aktivierungstastenschalter, FRC-Aktivierungstastenschalter (202), der eine FRC-Aktivierungs-Ein-Position, wobei die FRC-Aktivierungs-Ein-Position konfiguriert ist, um zu ermöglichen, dass das Sicherheitssteuergerät in einen Wartungs-Override-Modus eintritt, um die Eingabe von Wartungs-Overrides zu ermöglichen, und der FRC-Aktivierungstastenschalter eine FRC-AUS-Position aufweist, wobei die FRC-AUS-Position konfiguriert ist, um einen Sicherheitssteuergerätezustand in einen Betriebsmodus zurückzuversetzen, wobei die FRC-AUS-Position Änderungen an dem Wartungs-Override-Modus verhindert, indem zusätzliche Wartungs-Overrides unterbunden werden, bis der FRC-Aktivierungstastenschalter wieder in die FRC-Ein-Position gebracht wird, und
einen FRC-Rücksetztastenschalter (203) mit einer FRC-Rücksetzposition zum Aufheben der Wartungs-Overrides, die in dem Wartungs-Override-Aufhebungsmodus eingegeben werden.

2. Sicherheitssteuergerät nach Anspruch 1, wobei der Mehrtastenschalter weiter einen Modus-Tastenschalter (201) umfasst, der eine Betriebs-, eine Programm- und eine Stoppposition aufweist, und wobei das Sicherheitssteuergerät in der Betriebsposition derart konfiguriert ist, dass es in einem Betriebsmodus ist, der das Primärsteuergerät außer Kraft setzt, um das Sekundärsteuergerät nur in dem Fall eines erfassten Fehlers in dem gesteuerten Prozess oder eines erfassten Fehlers in dem Primärprozesssteuergerät umzusetzen.

3. Sicherheitssteuergerät nach Anspruch 1, wobei der Mehrtastenschalter einen Hardwareschalter umfasst.

4. Sicherheitssteuergerät nach Anspruch 1, wobei das Sicherheitssteuergerät eine programmierbare Logiksteuerung, PLC, umfasst.

5. Sicherheitssteuergerät nach Anspruch 1, die weiter einen seriellen Kommunikationsport, der dazu konfiguriert ist, direkte Kommunikation mit einem Programmieranschluss zu ermöglichen, umfasst.

6. Sicherheitssteuergerät nach Anspruch 1, wobei mehrere FRC-Befehle, die unterschiedliche Eingänge und Ausgänge bedienen, zu einem bestimmten Zeitpunkt akzeptiert und aktiv werden können.

7. Verfahren zur Prozesssteuerung für einen gesteuerten Prozess, der von einem fehlertoleranten Steuersystem ausgeführt wird, das Feldgeräte (144) beinhaltet, die Sensoren und Aktoren beinhalten, die mit Verarbeitungsgeräten (141) gekoppelt sind, die an dem gesteuerten Prozess beteiligt sind, und ein Sicherheitssteuergerät (150) umfasst, das ein Primärsteuergerät (118a) umfasst, das Prozessor (119a) beinhaltet, der mit einem Speicher (121a) assoziiert ist, und ein parallel geschaltetes Sekundärsteuergerät (118b), das einen Sekundärprozessor (119b) beinhaltet, der einen assoziierten zweiten Speicher (121b) aufweist, die beide mit den Verarbeitungsgeräten gekoppelt sind, wobei das Sicherheitssteuergerät (150) einen cybersicheren Wartungs-Override umsetzt, wobei das Sicherheitssteuergerät einen Mehrtastenschalter (200) aufweist, der beinhaltet:
einen Kraft-Aktivierungstastenschalter (FRC-Aktivierungstastenschalter) (202), der eine FRC-Aktivierungs-Ein-Position aufweist, um in einen Wartungs-Override-Modus einzutreten, um Eingabe von Wartungs-Overrides des Sicherheitssteuergeräts zu ermöglichen, und eine AUS-Position; und
einen FRC-Rücksetztastenschalter (203), der eine FRC-Rücksetzposition zum Aufheben der eingegebenen Wartungs-Overrides in dem Wartungs-Override-Modus aufweist, wobei das Verfahren die folgenden Schritte umfasst:
Bewegen des FRC-Aktivierungstastenschalters (202) in die FRC-Aktivierungs-Ein-Position, um es dem Sicherheitssteuergerät zu erlauben, in den Wartungs-Override-Modus einzutreten, um die Eingabe von Wartungs-Overrides zu ermöglichen, und
Zurückbringen des FRC-Aktivierungstastenschalters (202) in eine FRC-AUS-Position, um einen Sicherheitssteuergerätezustand in einen Betriebsmodus zurückzuversetzen, während Änderungen des Wartungs-Override-Modus verhindert werden, indem zusätzliche Wartungs-Overrides unterbunden werden, bis der FRC-Aktivierungstastenschalter wieder in die FRC-Ein-Position gebracht wird.

8. Verfahren nach Anspruch 7, wobei der Mehrtastenschalter weiter einen Modus-Tastenschalter (201) mit einer Betriebs-, einer Programm- und einer Stoppposition umfasst, und wobei das Sicherheitssteuergerät in der Betriebsposition derart konfiguriert ist, dass es in einem Betriebsmodus ist, der das Primärsteuergerät außer Kraft setzt, um das Sekundärsteuergerät nur im Falle eines erfassten Fehlers in dem gesteuerten Prozess oder eines erfassten Fehlers in dem Primärprozesssteuergerät umzusetzen.

9. Verfahren nach Anspruch 7, wobei der Mehrtastenschalter einen Hardwareschalter umfasst.

10. Verfahren nach Anspruch 7, wobei das Sicherheitssteuergerät mindestens eine programmierbare Logiksteuerung, PLC, umfasst.

11. Verfahren nach Anspruch 7, wobei das Sicherheitssteuergerät weiter einen seriellen Kommunikationsport umfasst, der konfiguriert ist, um eine direkte Kommunikation mit einem Programmieranschluss zu ermöglichen, das weiter das Programmieren des Sicherheitssteuergeräts unter Verwenden des Programmieranschlusses umfasst.

12. Verfahren nach Anspruch 7, das weiter ein Akzeptieren und Aktivieren mehrerer FRC-Befehle, die unterschiedliche Eingänge und Ausgänge bedienen, zu einem bestimmten Zeitpunkt umfasst.

## Revendications

1. Dispositif de commande de sécurité (150) pour un système de commande (100) conçu pour exécuter un processus contrôlé, le dispositif de commande de sécurité comprenant :
un circuit d'interface (157), conçu pour se coupler à des dispositifs d'entrée/sortie (ES) qui sont couplés à des dispositifs de terrain (144) comprenant des capteurs et des actionneurs qui sont couplés à un équipement de traitement (141) impliqué dans ledit processus contrôlé ;
un dispositif de commande principal (118a) comprenant un processeur (119a) ayant une mémoire associée (121a) et un dispositif de commande secondaire connecté en parallèle comprenant un processeur secondaire (119b) ayant une mémoire secondaire associée (121b), chacun étant conçu pour mettre en œuvre des boucles de contrôle qui prennent automatiquement des mesures en envoyant des signaux de commande auxdits actionneurs ;
un commutateur multi-clés de commutation de mode (200) couplé audit processeur (119a) ;
un bus (154) couplant ledit circuit d'interface (157) et ledit commutateur multi-clés de commutation de mode (200) couplé audit processeur, ledit commutateur multi-clés comprenant :
un commutateur à clé d'activation de force, FRC (202) ayant une position On d'activation de FRC, ladite position On d'activation de FRC étant configurée pour permettre audit dispositif de commande de sécurité d'entrer dans un mode de dérivation de maintenance pour permettre l'entrée de dérivations de maintenance, et le commutateur à clé d'activation de FRC ayant une position OFF d'arrêt de FRC, ladite position OFF d'arrêt de FRC étant configurée pour revenir d'un état de dispositif de commande de sécurité à un mode de fonctionnement, ladite position OFF d'arrêt de FRC empêchant les modifications dudit mode de dérivation de maintenance en interdisant des dérivations de maintenance supplémentaires jusqu'à ce que ledit commutateur à clé d'activation de FRC soit mis à nouveau sur ladite position On de marche de FRC, et
un commutateur à clé de réinitialisation de FRC (203) ayant une position Reset de réinitialisation de FRC pour la suppression desdites dérivations de maintenance entrées lorsqu'il se trouve dans ledit mode de dérivation de maintenance.

2. Dispositif de commande de sécurité selon la revendication 1, dans lequel ledit commutateur multi-clés comprend en outre un commutateur à clé de mode (201) ayant une position Run, Program et Stop, et dans lequel, lorsqu'il est dans ladite position Run, ledit contrôleur de sécurité est configuré pour être dans un mode de marche qui passe outre ledit dispositif de commande principal pour mettre en œuvre ledit dispositif de commande secondaire uniquement dans le cas d'une panne détectée dans ledit processus contrôlé ou d'une panne détectée dans ledit dispositif de commande de processus principal.

3. Dispositif de commande de sécurité selon la revendication 1, dans lequel ledit commutateur multi-clés comprend un commutateur matériel.

4. Dispositif de commande de sécurité selon la revendication 1, dans lequel ledit dispositif de commande de sécurité comprend un automate programmable industriel, API.

5. Dispositif de commande de sécurité selon la revendication 1, comprenant en outre un port série de communication configuré pour permettre une communication directe avec un terminal de programmation.

6. Dispositif de commande de sécurité selon la revendication 1, dans lequel plusieurs commandes de FRC desservant différentes entrées et sorties peuvent être acceptées et actives à un instant donné.

7. Procédé de commande de processus pour un processus contrôlé exécuté par un système de commande tolérant aux pannes comprenant des dispositifs de terrain (144) comprenant des capteurs et des actionneurs qui sont couplés à un équipement de traitement (141) impliqué dans ledit processus contrôlé, et un dispositif de commande de sécurité (150) comprenant un dispositif de commande principal (118a) comprenant un processeur (119a) ayant une mémoire associée (121a) et un dispositif de commande secondaire (118b) connecté en parallèle comportant un processeur secondaire (119b) ayant une seconde mémoire associée (121b) tous deux couplés audit équipement de traitement, ledit dispositif de commande de sécurité (150) mettant en œuvre une dérivation de maintenance cyber-sécurisée, ledit dispositif de commande de sécurité ayant un commutateur multi-clés (200) comprenant :
un commutateur à clé d'activation de force, FRC (202) ayant une position On d'activation de FRC pour entrer dans un mode de dérivation de maintenance pour permettre l'entrée de dérivations de maintenance dudit dispositif de commande de sécurité et une position OFF ; et
un commutateur à clé de réinitialisation de FRC (203) ayant une position Reset de réinitialisation de FRC pour la suppression desdites dérivations de maintenance entrées lorsqu'il se trouve dans ledit mode de dérivation de maintenance, le procédé comprenant les étapes de :
déplacement dudit commutateur à clé d'activation de FRC (202) dans ladite position On d'activation de FRC pour permettre audit contrôleur de sécurité d'entrer dans ledit mode de dérivation de maintenance pour permettre l'entrée de dérivations de maintenance, et
remettre ledit commutateur à clé d'activation de FRC (202) dans une position OFF d'arrêt de FRC pour revenir d'un état du contrôleur de sécurité à un mode de fonctionnement tout en empêchant les changements dudit mode de dérivation de maintenance en interdisant des dérivations de maintenance supplémentaires jusqu'à ce que ledit commutateur à clé d'activation de FRC soit mis à nouveau sur ladite position On de marche de FRC.

8. Procédé selon la revendication 7, dans lequel ledit interrupteur multi-clés comprend en outre un interrupteur à clé de mode (201) ayant une position Run, Program et Stop, et dans lequel, lorsqu'il est dans ladite position Run de marche, ledit dispositif de commande de sécurité est configuré pour être en mode Run de marche qui passe outre ledit dispositif de commande principal pour mettre en œuvre ledit dispositif de commande secondaire uniquement dans le cas d'une panne détectée dans ledit processus contrôlé ou d'une panne détectée dans ledit dispositif de commande de processus principal.

9. Procédé selon la revendication 7, dans lequel ledit commutateur multi-clés comprend un commutateur matériel.

10. Procédé selon la revendication 7, dans lequel ledit dispositif de commande de sécurité comprend au moins un automate programmable industriel, API.

11. Procédé selon la revendication 7, dans lequel ledit dispositif de commande de sécurité comprend en outre un port série de communication configuré pour permettre une communication directe avec un terminal de programmation, comprenant en outre la programmation dudit contrôleur de sécurité en faisant appel audit terminal de programmation.

12. Procédé selon la revendication 7, comprenant en outre l'acceptation et l'activation à un instant donné de plusieurs commandes de FRC desservant différentes entrées et sorties.
